# FASCICULE DE BREVET EUROPEEN

(11) **EP 0 647 295 B1**
(45) Date de publication et mention de la délivrance du brevet: **09.10.1996**
(21) Numéro de dépôt: 93914799.7
(22) Date de dépôt: 02.07.1993
(51) Int. Cl.: F16H 3/72, F16D 43/10

(54) **PROCEDE POUR COMMANDER UN CHANGEMENT DE RAPPORT ET DISPOSITIF DE TRANSMISSION A ENGRENAGES S'Y RAPPORTANT, EN PARTICULIER POUR VEHICULE**
VERFAHREN ZUM STEUERN EINES WECHSELGETRIEBES UND DAZU GEHÖRENDES ZAHNRADGETRIEBE
RATIO CHANGE CONTROL METHOD AND RELATED GEAR TRANSMISSION DEVICE, IN PARTICULAR FOR A VEHICLE

(30) Priorité: 03.07.1992 FR 9208236
(43) Date de publication de la demande: 12.04.1995
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9300674
(87) Numéro de publication internationale: WO9401696

(56) Documents cités:
- FR-A- 661 325
- FR-A- 1 191 526
- FR-A- 2 190 220
- FR-A- 2 368 652
- US-A- 3 130 607

## Description

La présente invention concerne un procédé pour commander un changement de rapport de transmission dans un dispositif de transmission à engrenage.

La présente invention concerne également un dispositif pour la mise en oeuvre de ce procédé.

On connaît des dispositifs de transmission dans lesquels on réalise un rapport de prise directe ou un rapport de modification de vitesse selon que deux dentures qui engrènent l'une avec l'autre sont respectivement immobiles l'une par rapport à l'autre ou en mouvement d'engrènement l'une par rapport à l'autre.

Pour passer de l'un à l'autre rapport, on peut par exemple serrer ou desserrer un embrayage qui solidarise les deux dentures, directement ou indirectement, pour réaliser le rapport de prise directe, ou encore, par exemple freiner l'une des dentures relativement à un bâti du dispositif de transmission pour que l'autre denture roule sur celle qui est immobilisée.

Ces commandes d'embrayage ou de frein, qu'elles soient manuelles ou automatiques, peuvent s'opérer de manière plus ou moins brutales selon les circonstances. Elles nécessitent un travail de friction, générateur d'échauffement et d'usure.

On connaît d'après le FR-A-1 191 526 ou le US-A-3 103 607 des dispositifs de transmission dans lesquels on effectue ces changements en libérant ou non le refoulement d'au moins une pompe à engrenage additionnelle, dont un rotor est relié à un élément rotatif de la combinaison de dentures, pour libérer ou non cet élément rotatif. Mais ces dispositions sont complexes, lourdes et encombrantes.

Le FR-A-2 190 220 décrit un différentiel à glissement limité dans lequel c'est la combinaison de dentures qui transmet la puissance qui est elle-même aménagée pour former une pompe hydraulique dont le trajet de sortie est d'autant plus rétréci que la vitesse relative des dentures augmente. Il est en outre prévu des moyens qui ferment l'orifice de sortie lorsque la température de l'huile augmente.

Le but de l'invention est ainsi de proposer un procédé et un dispositif dans lequel les changements de rapport puissent s'effectuer en souplesse et avec une usure réduite, avec des moyens simples.

Suivant l'invention, il est proposé un procédé pour commander un changement de rapport dans une transmission comprenant une combinaison de dentures engrenées pouvant fonctionner en un état de mobilité relative dans lequel la combinaison de denture transmet de la puissance selon un premier rapport de vitesse entre une sortie et une entrée de la transmission, ou en état de fixité relative pour réaliser un deuxième rapport de vitesse entre la sortie et l'entrée de la transmission, la combinaison de dentures engrenées étant réalisée sous forme d'une pompe hydraulique à engrenage, procédé dans lequel on commande le deuxième rapport de transmission en annulant sensiblement le débit à la sortie de la pompe à engrenage, on commande le premier rapport de transmission en libérant le débit à la sortie de la pompe à engrenage, et pour passer du premier au deuxième rapport, après avoir au moins en partie annulé le débit de sortie de la pompe à engrenage, on fait passer à l'état accouplé un embrayage qui à l'état accouplé tend à faire fonctionner la combinaison de dentures dans l'état de fixité relative et à l'état désaccouplé permet à la combinaison de dentures l'état de mobilité relative correspondant au premier rapport de transmission.

Suivant un second aspect de l'invention, il est proposé un dispositif de transmission à au moins deux rapports, comprenant une combinaison de dentures pouvant fonctionner en un état de mobilité relative dans lequel la combinaison transmet de la puissance selon un premier rapport de vitesse entre l'entrée et la sortie de la transmission ou en état de fixité relative pour réaliser un deuxième rapport de vitesse entre l'entrée et la sortie de la transmission, des moyens de guidage d'huile le long des régions de deux dentures de la combinaison qui se déplacent l'une vers l'autre lors du fonctionnement selon le premier rapport de transmission, des moyens d'admission d'huile dans les creux de dentures de l'une au moins de ces régions, un trajet de refoulement d'huile partant d'une région où les deux dentures commencent à engrener, des moyens de commande de changement de rapport comprenant des moyens pour sélectivement ouvrir ou sensiblement fermer le trajet de refoulement de l'huile pour commander le fonctionnement selon le premier rapport de transmission ou respectivement le fonctionnement selon le deuxième rapport de transmission, et un embrayage qui relie sélectivement deux éléments rotatifs reliés au moins indirectement aux dentures de la combinaison de manière que la combinaison de dentures travaille selon le deuxième rapport de transmission lorsque l'embrayage est dans un état accouplé, les moyens de commande de changement de rapport comprenant en outre des moyens pour, lors du passage du premier au deuxième rapport de transmission, commander le passage de l'embrayage à l'état accouplé après la fermeture au moins partielle dudit trajet de refoulement de l'huile.

Ainsi, le changement de rapport s'effectue en modifiant les conditions d'écoulement à la sortie d'une pompe hydraulique constituée par la combinaison de dentures elle-même. Ceci est rendu possible par le fait que l'un des rapports de transmission correspond à une immobilité des dentures entre elles, et non pas comme dans l'art antérieur, à une immobilisation d'une denture déterminée par rapport au carter de la transmission. L'huile, grâce à sa relative compressibilité, amortit les chocs mécaniques. Pour le passage du premier au deuxième rapport, la fermeture au moins partielle du débit de sortie de la pompe hydraulique réduit fortement le travail d'accouplement à effectuer par l'embrayage. Ensuite, l'embrayage, une fois accouplé, assure la fixité relative des dentures.

Selon une version avantageuse de l'invention, on fait passer le trajet de refoulement de l'huile entre des faces de friction de l'embrayage, de façon que ce trajet tende à se fermer lorsque l'embrayage se serre.

Ainsi, pour commander le passage en prise directe, on serre l'embrayage. Dès que les faces de friction se rapprochent mutuellement, l'augmentation de la perte de charge qui en résulte dans le trajet de refoulement de l'huile crée dans la pompe hydraulique une force tendant à ralentir le mouvement relatif des dentures de la combinaison. Ceci se produit même avant qu'il y ait effectivement contact entre les faces de friction de l'embrayage. Lorsque les faces sont en contact l'une contre l'autre, et que la friction entre les faces commence, la pompe à huile ne dispose plus que d'un trajet de fuite correspondant à une très forte perte de charge et le mouvement relatif des dentures est donc largement éliminé. Le travail effectif de l'embrayage ne consiste plus alors qu'à terminer l'immobilisation des dentures l'une par rapport à l'autre.

De cette manière, on introduit une progressivité remarquable et en même temps on réduit considérablement le travail de friction à effectuer par l'embrayage, donc son usure et son échauffement, tout en ayant en outre l'avantage d'irriguer en permanence les faces de friction de l'embrayage avec du fluide hydraulique, ce qui contribue à leur protection et à leur refroidissement.

Dans ces conditions, on peut utiliser un embrayage de plus faible dimension qui aura cependant une longévité accrue.

D'autres particularités et avantages de l'invention ressortiront encore de la description ci-après, relative à des exemples non limitatifs.

Aux dessins annexés :
- la figure 1 est une vue en coupe longitudinale schématique d'un dispositif de transmission à cinq rapports selon l'invention, fonctionnant selon le premier rapport en haut de la figure et selon le deuxième rapport en bas de la figure, certains moyens d'étanchéité étant omis ;
- la figure 2 est une vue partielle en coupe selon II-II de la figure 1 ;
- la figure 3 est un détail de la figure 1, à échelle agrandie ;
- la figure 4 est une vue analogue à la figure 3, mais prise selon la ligue IV-IV de la figure 5 ;
- la figure 5 est une vue schématique partielle du montage du train épicycloïdal en pompe à huile, vu parallèlement à l'axe du dispositif ;
- la figure 6 est une vue d'un disque rainuré en coupe selon la ligne VI-VI de la figure 2 ;
- les figures 7 et 8 sont deux vues en coupe des disques selon la ligne VII-VII de la figure 2, lorsque l'embrayage est serré et respectivement desserré ; et
- les figures 9 et 10 sont des vues analogues à la figure 6, mais relatives à deux autres modes de réalisation des disques rainurés, la figure 10 montrant en outre les deux disques lisses adjacents.

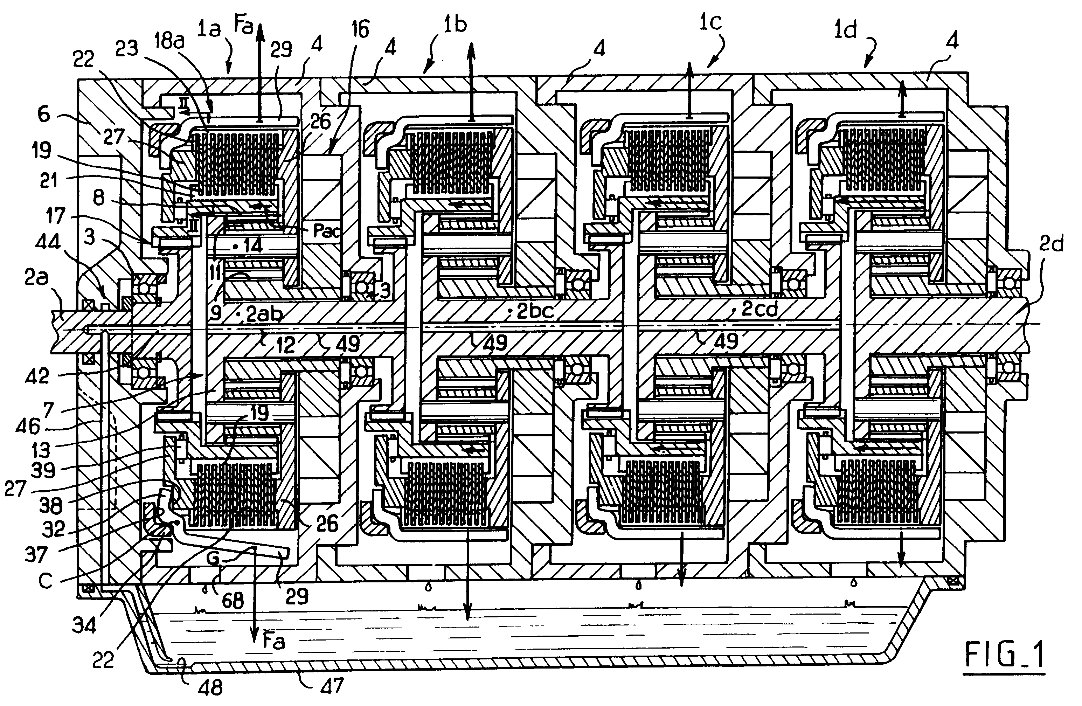

Le dispositif de transmission à cinq rapports représenté à la figure 1, destiné en particulier à une automobile, comprend quatre modules successifs 1a, 1b, 1c, 1d, à deux rapports chacun, montés en série entre un arbre d'entrée 2a et un arbre de sortie 2d du dispositif de transmission. L'arbre d'entrée 2a peut être relié au disque mené d'un embrayage, et constitue aussi l'arbre d'entrée dans le module la. L'arbre de sortie 2d constitue en même temps l'arbre de sortie du module 1d et peut être relié à l'entrée d'un différentiel pour l'entraînement des roues motrices d'un véhicule.

Il y a le long de l'axe 12 du dispositif de transmission, entre l'arbre d'entrée 2a et l'arbre de sortie 2d, trois arbres intermédiaires successifs 2ab, 2bc, 2cd qui constituent chacun l'arbre de sortie du module 1a, 1b, 1c respectivement situé en amont, et l'arbre d'entrée du module 1b, 1c, 1d respectivement situé en aval. Les arbres intermédiaires 2ab, 2bc et 2cd sont chacun supportés par un palier à roulement 3 dans un carter 4 du module 1a, 1b et 1c dont ils constituent l'arbre de sortie. Les carters 4 des modules sont assemblés les uns aux autres pour former, avec une plaque d'extrémité 6 supportant l'arbre d'entrée 2a au moyen d'un autre palier à roulement 3, le carter de l'ensemble du dispositif de transmission .

On va maintenant décrire plus en détail le module la, cette description étant valable aussi pour les modules 1b, 1c et 1d qui sont identiques au module la excepté pour les différences que l'on signalera.

Un train épicycloïdal 7 comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2ab. Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2ab qu'elle entoure. Toutefois, un dispositif de roue libre 16 empêche la roue planétaire 9 de tourner en sens rétrograde, c'est à dire en sens inverse du sens normal de rotation de l'arbre d'entrée 2a, par rapport au carter 4 du module.

La couronne 8 est liée en rotation à l'arbre d'entrée 2a du module par l'intermédiaire de cannelures 17 permettant à la couronne 8 de coulisser par rapport à l'arbre d'entrée 2a parallèlement à l'axe 12 du dispositif de transmission.

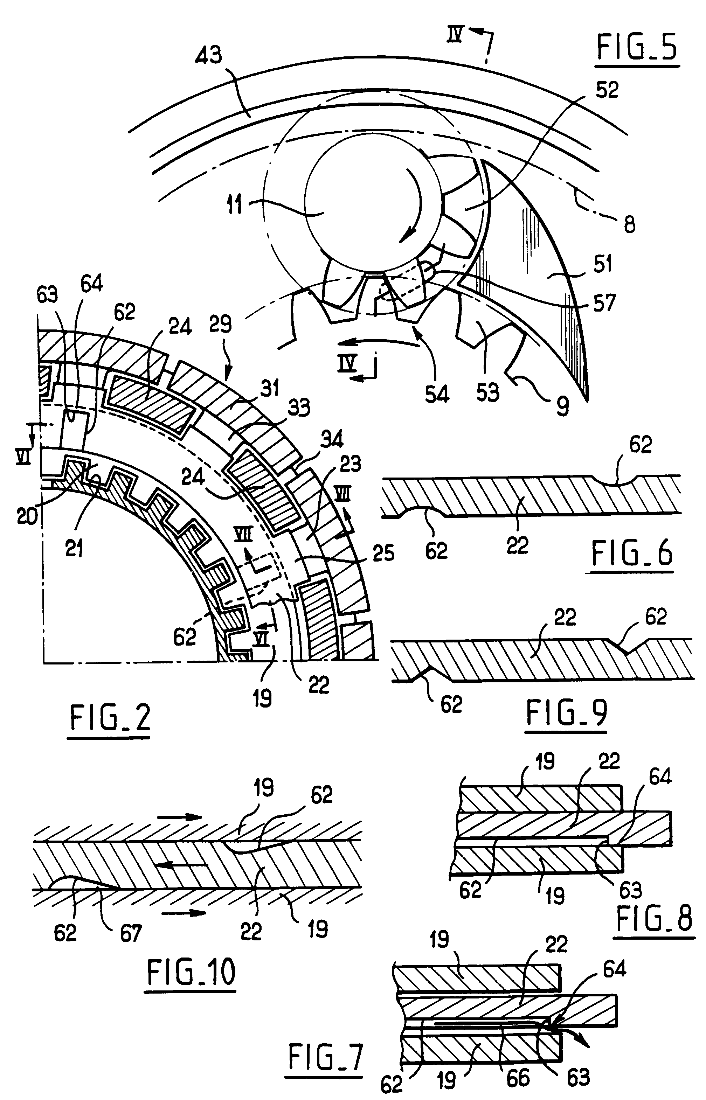

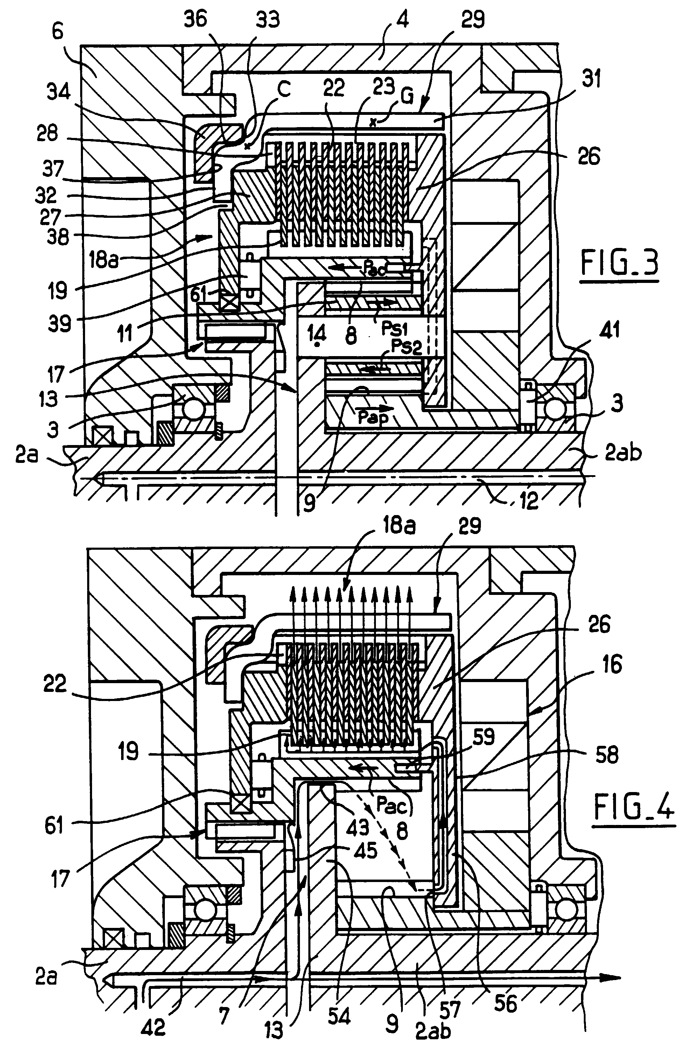

Un embrayage 18a, du type multidisques à bain d'huile, est disposé autour de la couronne 8. Il comprend un empilement de disques annulaires 19 alternant avec des disques annulaires 22. Les disques 19 sont reliés en rotation à la couronne 8 avec possibilité de coulissement axial. Pour cela, les disques 19 ont des dents 20 engagées dans des cannelures extérieures 21 solidaires de la couronne 8 (voir figure 2). Les disques 22 sont liés en rotation, avec possibilité de coulissement axial, au porte-satellites 13. Pour cela, les disques 22 ont des dents 25 engagées dans des cannelures 23 solidaires du porte-satellites 13.

Les cannelures 21 sont à fond fermé alors que les cannelures 23 situées radialement à l'extérieur sont constituées par des fentes axiales traversantes entre des lamelles 24. De manière classique, les cannelures 23, situées radialement à l'extérieur des cannelures 21, ont un pas beaucoup plus grand que les cannelures 21 : il suffit d'un moindre nombre de cannelures 23 car l'effort circonférentiel à transmettre pour un couple de rotation donné est plus faible, et ce moindre nombre de cannelures est réparti sur une circonférence plus grande.

Comme le montre le mieux la figure 3, l'empilement de disques 19 et 22 peut être serré axialement entre un plateau fixe 26 solidaire du porte-satellites 13 et un plateau mobile 27 qui est solidaire du porte-satellites 13 pour les rotations autour de l'axe 12 du dispositif, mais qui peut coulisser par rapport au porte-satellites 13 et en particulier par rapport au plateau 26, parallèlement à l'axe 12 du dispositif, grâce à une denture extérieure 28 engagée dans les cannelures 23 solidaires du porte-satellites 13.

En outre, des masselottes 29 sont disposées en couronne autour de l'embrayage 18a, comme le montre aussi la figure 2.

Chaque masselotte a un corps massif 31 situé radialement à l'extérieur des disques 19 et 22 et un bec d'actionnement 32 appuyé contre une face extérieure 38 du plateau mobile 27. Le bec 32 est relié au corps massif 31 par un col d'accrochage 33 qui traverse les cannelures 23, de sorte que les masselottes 29 sont entraînées en rotation par le porte-satellites 13 autour de l'axe 12 du dispositif. Les cannelures 23 s'étendent axialement entre le plateau fixe 26 de l'embrayage et un cerceau 34 ayant un profil en forme de cornière. Une face 36 du cerceau 34, tournée vers l'axe 12, empêche le col 33 et le bec d'actionnement 32 de se déplacer radialement vers l'extérieur. Une face radiale 37 du cerceau 34 sert de butée axiale au bec 32 et permet ainsi au bec 32 de limiter de manière variable l'écartement entre les plateaux d'embrayage 26 et 27, comme on le verra plus loin.

Le cerceau 34 permet en effet à chaque masselotte 29 de pivoter autour d'un axe géométrique C orienté tangentiellement par rapport à l'axe 12 du dispositif et traversant le col 33 de la masselotte. Le centre de gravité G de la masselotte est situé dans le corps massif 31, en une position qui présente par rapport à l'axe C un certain écartement mesuré parallèlement à l'axe 12 du dispositif.

Ainsi, comme représenté pour le module la dans la partie inférieure de la figure 1, la rotation du porte-satellites 13 tend à faire pivoter radialement vers l'extérieur les masselottes 29 autour de leur axe tangentiel C sous l'action de leur force centrifuge Fa. Le bec d'actionnement 32 prend alors une position oblique qui augmente l'écartement, mesuré parallèlement à l'axe 12, entre la face radiale 37 du cerceau 34 et la face radiale 38, située en regard, et appartenant au plateau mobile 27 de l'embrayage. Le plateau mobile 27 est donc déplacé en direction du plateau fixe 26 en serrant les disques 19 et 22 les uns contre les autres. Ceci réalise un accouplement entre l'arbre d'entrée 2a et l'arbre de sortie 2ab du module, ce qui correspond à un fonctionnement en prise directe.

Au contraire, lorsque les masselottes 29 sont dans la position de repos représentée en haut de la figure 1 et à la figure 3, l'écartement entre le plateau fixe 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge que doit entraîner l'arbre de sortie 2ab du module. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a.

Comme le montrent les figures 1 et 3, la couronne 8 et le plateau mobile 27 sont appuyés axialement l'un contre l'autre au moyen d'une butée axiale 39. Lorsque les masselottes 29 se soulèvent et poussent le plateau mobile 27 vers le plateau fixe 26, ce mouvement est transmis par la butée axiale 39 à la couronne 8 qui se déplace donc, elle aussi, vers le plateau fixe 26.

D'autre part, les dentures de la couronne 8, des satellites 11 et de la roue planétaire 9 sont de type hélicoïdal. Ainsi, dans chaque couple de dentures engrènant sous charge, il apparait des poussées axiales opposées proportionnelles à la force circonférentielle transmise, donc au couple sur l'arbre d'entrée 2a et au couple sur l'arbre de sortie 2ab. Le sens d'inclinaison des dentures est choisi pour que la poussée axiale Pac prenant naissance dans la couronne 8 lorsqu'elle transmet un couple moteur soit orientée dans le sens écartant la couronne 8 et avec elle le plateau mobile 27 par rapport au plateau fixe 26 de l'embrayage. Les satellites 11, qui engrènent non seulement avec la couronne 8 mais aussi avec la roue planétaire 9, subissent deux réactions axiales opposées PS1 et PS2, qui s'équilibrent, et la roue planétaire 9 subit, compte-tenu de son engrènement avec les satellites 11, une poussée axiale Pap qui est égale en intensité et opposée à la poussée axiale Pac de la couronne 8. Le montage est tel que la poussée Pap de la roue planétaire 9 est transmise au porte-satellites 13. Ainsi, les poussées axiales Pac et Pap, égales et opposées, sont transmises l'une au plateau mobile 27 et l'autre au plateau fixe 26 dans le sens tendant à desserrer l'embrayage 18a. Ces forces tendent aussi à rapprocher l'une de l'autre la face radiale 37 du cerceau 34 et la force radiale opposée 38 du plateau mobile 27, donc à redresser le bec 32 des masselottes, donc à ramener les masselottes 29 dans leur position de repos représentée en haut de la figure 1 et à la figure 3.

La poussée axiale Pap de la roue planétaire 9 est reprise par le palier 3 grâce à une butée axiale 41 interposée entre la roue planétaire 9 et le palier 3. Avec ce montage, le porte-satellites 13 et par conséquent le plateau fixe 26 ainsi que le cerceau 34 retenant les masselottes 29 sont immobiles par rapport au carter 4 du module. Par ailleurs, l'arbre d'entrée 2a est immobilisé par rapport à la plaque d'extrémité 6 grâce au montage de son propre palier 3. Ainsi, c'est le plateau mobile 27 de l'embrayage et la couronne 8 qui se déplacent axialement par rapport aux arbres 2a et 2ab, au porte-satellites 13 et au carter. Cela est permis en particulier par les cannelures 17 par l'intermédiaire desquelles la couronne 8 est entraînée par l'arbre 2a.

Ainsi, à partir de la situation représentée à la figure 3, tant que le couple transmis au module par l'arbre d'entrée 2a est tel que les poussées axiales Pac et Pap dans la couronne 8 et la roue planétaire 9 suffisent pour maintenir les masselottes 29 dans la position de repos représentée à la figure 3 malgré la force centrifuge subie par ces masselottes compte-tenu de la vitesse de rotation de l'arbre de sortie 2ab, le module fonctionne en réducteur. Si la vitesse de rotation augmente et que le couple reste inchangé, il arrive un instant où la force centrifuge produit entre le cerceau 34 et le plateau mobile 27 des forces axiales d'écartement ayant une intensité plus grande que les poussées axiales Pac et Pap, et le plateau mobile 27 est poussé vers le plateau 26 pour réaliser la prise directe. On reviendra en détail plus loin sur le processus de passage en prise directe et sur certaines particularités mises en oeuvre lors de ce processus, qui font plus spécialement l'objet de la présente invention.

Lorsque l'embrayage 18a est serré, les dentures du train épicycloïdal 7 ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 27 et 26 l'un vers l'autre.

Il peut alors arriver que la vitesse de rotation de l'arbre de sortie 2ab diminue, et/ou que le couple à transmettre augmente, au point que les masselottes n'assurent plus une force de serrage suffisante dans l'embrayage 18a. Dans ce cas, l'embrayage 18a commence à patiner, des poussées axiales Pac et Pap apparaissent et tendent à écarter les plateaux 26 et 27 l'un de l'autre, ce qui augmente encore le patinage, et ainsi de suite jusqu'à disparition très rapide de toute friction significative dans l'embrayage, de sorte que le module fonctionne ensuite en réducteur.

Si l'on considère le cas où tous les modules 1a - 1d fonctionnent en réducteur (partie supérieure de la figure 1), ce qui réalise le premier rapport du dispositif de transmission, c'est dans le module 1a que la vitesse est la plus forte et le couple est le plus faible, comme cela est illustré par une flèche Fa de grande dimension et une flèche Pac de petite dimension. C'est donc ce premier module la qui passe le premier en prise directe lorsque le véhicule accélère, comme représenté en bas de la figure 1. Le couple diminue dans le second module 1b, car il n'est plus augmenté par la démultiplication dans le premier module, mais les vitesses de rotation dans le second module restent inchangées, donc inférieures à celles dans le premier module juste avant le changement, car elles sont déterminées par la vitesse de rotation des roues du véhicule. Il faut donc que la vitesse du véhicule augmente encore pour que le second module atteigne à son tour les conditions de passage en prise directe si le couple fourni par le moteur demeure inchangé. Et ainsi de suite jusqu'à ce que tous les modules du dispositif de transmission soient en prise directe. Ainsi, des modules tous identiques, même en ce qui concerne leurs réglages, permettent de réaliser un passage échelonné des rapports de vitesse.

On va maintenant décrire plus en détail certaines particularités qui améliorent le fonctionnement des embrayages, notamment lors du passage de l'état serré à l'état desserré, et qui diminuent l'usure et l'échauffement des embrayages.

Comme le montre schématiquement la figure 4, le train épicycloïdal 7 est aménagé pour former une pompe hydraulique à engrenage aspirant de l'huile à travers un conduit axial 42 de l'arbre d'entrée 2a et à travers un intervalle annulaire 43 entre un bord périphérique extérieur du porte-satellites 13 et la couronne 8. Les cannelures 17 sont fermées par une étanchéité 45 empêchant de l'air d'être aspiré par la pompe hydraulique à travers ces cannelures.

Comme le montre la figure 1, le conduit axial 42 de l'arbre d'entrée 2a est raccordé par un système de joint tournant 44 avec un conduit 46 pratiqué dans la plaque de fermeture 6 et dans un bac à huile 47 fixé sous les carters 4. L'extrémité 48 du conduit 46 débouche au fond du bac 47, de sorte que l'aspiration de la pompe hydraulique constituée par le train épicycloïdal 7 aspire de l'huile dans le bac à huile 47 pour l'amener dans les dentures du train épicycloïdal.

Les arbres intermédiaires 2ab, 2bc, 2cd sont complètement traversés axialement par des conduits 49 qui permettent au train épicycloïdal de chacun des modules 1b, 1c et 1d de fonctionner lui aussi en pompe à huile en aspirant de l'huile provenant du conduit 46 relié au fond du bac à huile 47.

La figure 5 montre comment on peut réaliser une telle pompe à huile avec un train épicycloïdal. Une pièce de guidage d'huile 51 est fixée au porte-satellites 13 au voisinage de chaque satellite 11 de manière à fermer les creux de denture 52 du satellite 11 et 53 de la roue planétaire 9 qui en fonctionnement se déplacent vers la zone d'engrènement 54. De plus, ces creux de denture 52 et 53 sont fermés à leurs deux extrémités axiales par deux plaques 54 et 56 (figure 4) du porte-satellites 13, qui sont situées de part et d'autre des satellites 11 et qui sont reliées rigidement à l'arbre de sortie 2ab et respectivement au plateau fixe 26 de l'embrayage. Comme le montre la figure 3, ces plaques 54 et 56 supportent chacune une des extrémités des tourillons 14 sur lesquels sont montés les satellites 11.

Revenant à la figure 5, l'huile arrivée par l'intervalle annulaire 43 entre la couronne 8 et la roue planétaire 9, remplit tout l'espace disponible et en particulier les creux de denture 52, 53 avant que ces creux de denture ne soient fermés par la pièce de guidage 51. Une fois que les creux de denture 52 et 53 sont fermés, l'huile ne peut plus s'en échapper. Juste au moment où le volume libre des creux de denture commence à diminuer en raison de l'interpénétration des dentures dans la zone d'engrènement 54, les creux de denture 52 et 53 commencent à communiquer avec une lumière 57 par laquelle l'huile est refoulée sous une pression qui dépend de la perte de charge que l'huile rencontre sur son trajet en aval de la lumière 57.

Un labyrinthe d'étanchéité 59 est formé entre la couronne 8 et la plaque 56 tout en permettant le coulissement axial et la rotation relatifs entre elles. La lumière 57 constitue l'extrémité d'un conduit de refoulement 58 pratiqué dans l'épaisseur de la plaque 56 et débouchant radialement entre l'empilement de disques 19, 22 et le labyrinthe 59.

Par ailleurs, l'espace annulaire situé entre la couronne 8 et l'empilement de disques 19, 22 est fermé par un joint d'étanchéité 61 monté entre le plateau mobile 27 et la couronne 8 avec possibilité de libre rotation entre la couronne 8 et le plateau 27 autour de l'axe 12 du dispositif de transmission.

Ainsi, l'huile refoulée par le train épicycloïdal 7 dans le conduit 58 ne peut s'échapper vers l'extérieur qu'en passant entre les disques 19 et 22 de l'empilement, comme illustré par de multiples flèches à la figure 4.

On pourrait prévoir que l'huile s'écoule par l'écartement existant entre les disques lorsque l'embrayage est à l'état desserré. Toutefois, il est préférable de faire en sorte que l'écartement entre les disques à l'état desserré soit aussi faible que possible pour rendre aussi petite que possible la course axiale du plateau mobile 27 par rapport au plateau fixe, et on recherche donc que l'écartement entre les disques 19 et 22 lorsque l'embrayage est à l'état desserré soit juste suffisant pour éviter la transmission de couple par friction. Dans ces conditions, cet écartement n'est pas suffisant pour permettre un libre passage de l'huile, et il en résulterait, lorsque le module fonctionne en réducteur, un mauvais rendement de la transmission dû au fait que le montage du train épicycloïdal en pompe hydraulique entraine une consommation de puissance significative.

Pour éviter cela, on a formé dans les disques 22, comme le montrent les figures 2 et 6, des rainures dirigées radialement 62 ayant une profondeur de par exemple 5/10ème de millimètre. Il y a des rainures 62 sur les deux faces de chaque disque 22, les rainures d'une face étant décalées angulairement par rapport à celles de l'autre face pour éviter d'affaiblir mécaniquement le disque.

En outre, comme le montrent les figures 2, 7 et 8, les rainures 62 sont ouvertes à travers le bord radialement intérieur des disques 22 mais sont fermées par un épaulement 63 à leur extrémité radialement extérieure. L'épaulement 63 est situé en regard du disque 19 situé en face. Ainsi, comme représenté à la figure 7, lorsque l'embrayage est à l'état desserré, l'huile peut passer entre les disques 19 et 22 en utilisant le trajet 66 défini par les rainures 62 et par un étranglement 64 formé entre les disques 19 et 22 au-delà de l'épaulement 63. Cet étranglement 64, ayant une très courte longueur radiale, est franchi par l'huile sans perte de charge excessive. De plus cette perte de charge est compensée par la pression d'origine centrifuge qui règne dans l'huile, et qui s'ajoute à la pression produite par la pompe. La pression d'origine centrifuge est grande car les étranglements 64 sont radialement éloignés de l'axe 12.

Comme représenté à la figure 8, lorsque l'embrayage est à l'état serré, l'étranglement 64 se ferme complètement et le trajet de l'huile est interrompu.

On va maintenant décrire plus en détail le processus de serrage de l'embrayage 18a. Lorsque les masselottes 29 commencent à se soulever et à pousser le plateau mobile 27 vers le plateau fixe 26, les disques 19 et 22 se rapprochent les uns des autres, ce qui commence à fermer les étranglements 64 (figure 7 et 8) du trajet d'écoulement de l'huile. Ceci freine l'écoulement à la sortie de la pompe à huile constituée par le train épicycloïdal 7 et cette perte de charge accrue freine le mouvement relatif des dentures du train épicycloïdal. Lorsque les disques 19 et 22 sont juste dans la situation de contact mutuel théorique, c'est à dire sans jeu entre eux mais aussi sans serrage, le trajet de refoulement de l'huile est déjà dans la situation de complète fermeture représentée à la figure 8. La pompe à huile est donc pratiquement bloquée, et le train épicycloïdal pratiquement en prise directe, avant même que les disques n'aient vraiement commencé leur travail de friction. A partir de cette situation, le travail de friction des disques par serrage de l'empilement ne sert plus qu'à finir l'immobilisation des dentures du train épicycloïdal pour parfaire la situation de prise directe.

Ainsi, l'échauffement et l'usure des disques sont quasiment supprimés. L'huile occupant les rainures 62 enduit les faces de friction des disques 19, qui à leur tour enduisent les faces des disques 22 tant qu'il y a mouvement relatif entre les disques. Cette huile qui irrigue les faces de friction réduit encore l'échauffement et l'usure.

Les changements de rapport s'effectuent de manière beaucoup plus onctueuse : le ralentissement du mouvement relatif des dentures du train épicycloïdal commence dès que les disques commencent à se rapprocher les uns des autres avant qu'ils n'aient atteint la position de contact théorique entre eux. De plus, la pression régnant dans les rainures 62, et qui augmente à mesure que les étranglements 64 se ferment, tend à écarter les disques les uns des autres et empêche donc le serrage de s'effectuer brutalement même si, par exemple, le passage en prise directe résulte d'une disparition brutale du couple moteur (lorsque le conducteur relache l'accélérateur) et que par conséquent les masselottes 29 sont brusquement mises en condition de serrer énergiquement l'embrayage. On peut régler cet effet d'amortissement en choisissant convenablement l'aire totale des rainures 62 sur chaque face des disques 22, puisque cette aire est celle sur laquelle s'excerce la pression de l'huile pour tendre à écarter les disques.

L'huile, après avoir franchi l'étranglement 64, s'échappe en passant entre les lamelles 24 (figure 2) puis entre les corps 31 des masselottes 29, pour être projetée contre la paroi intérieure du carter 4 avant de retomber dans le bac à huile 47 à travers un orifice inférieur 68 du carter 4.

Lorsque l'embrayage 18a à l'état serré devient incapable de transmettre le couple, la fermeture des étranglements 64 n'empêche pas l'embrayage de commencer à patiner pour que s'engage le processus de retour du module au fonctionnement en réducteur. En effet, le trajet de refoulement de l'huile à partir de la zone d'engrènement 54 (figure 5) est relié à de nombreux jeux permettant des fuites, par exemple entre les faces des satellites 11 et les plaques 54 et 56 du porte-satellites 13. Ceci permet aux dentures du train épicycloïdal de reprendre leur mouvement relatif de manière progressive à mesure que l'embrayage patine. Là encore l'invention, en empêchant la reprise brutale des mouvements relatifs dans le train épicycloïdal 7, supprime les à-coups lors des changements de rapport.

Même s'il n'y avait pas de fuites dans le trajet de refoulement de l'huile, dès lors que l'embrayage n'est plus capable de transmettre tout le couple, une partie de la transmission se ferait donc par les dentures immobiles les unes par rapport aux autres, et la poussée axiale Pac réapparaitrait et viendrait réduire encore le serrage de l'embrayage, et ainsi de suite jusqu'à ce que le module fonctionne en réducteur.

On a représenté à la figure 6 les rainures 62 ayant un profil en arc de cercle.

La figure 9 montre un autre exemple avec des rainures 62 à profil triangulaire.

La figure 10 montre encore un autre exemple avec des rainures 62 ayant un profil dissymétrique définissant, à l'arrière du profil relativement à la direction du mouvement relatif, un coin d'huile 67 favorisant la formation d'un film d'huile derrière la rainure 62 par référence au mouvement relatif.

Bien entendu, l'invention n'est pas limitée aux exemples décrits et représentés.

L'invention est applicable à tout dispositif de transmission dans lequel on passe d'un rapport à un autre en immobilisant deux dentures interengrenées l'une par rapport à l'autre .

## Revendications

1. Procédé pour commander un changement de rapport dans une transmission comprenant une combinaison de dentures (8, 9, 11) engrenées pouvant fonctionner en un état de mobilité relative dans lequel la combinaison transmet de la puissance selon un premier rapport de vitesse entre une sortie et une entrée de la transmission, ou en état de fixité relative pour réaliser un deuxième rapport de vitesse entre la sortie et l'entrée de la transmission, la combinaison de dentures engrenées étant réalisée sous forme d'une pompe hydraulique à engrenage (9, 11, 51, 57), procédé dans lequel on commande le deuxième rapport de transmission en annulant sensiblement le débit à la sortie de la pompe à engrenage, on commande le premier rapport de transmission en libérant le débit à la sortie de la pompe à engrenage, et pour passer du premier au deuxième rapport, après avoir au moins en partie annulé le débit de sortie de la pompe à engrenage, on fait passer à l'état accouplé un embrayage (18a) qui à l'état accouplé tend à faire fonctionner la combinaison de dentures dans l'état de fixité relative et à l'état désaccouplé permet à la combinaison de dentures l'état de mobilité relative correspondant au premier rapport de transmission.

2. Procédé selon la revendication 1, caractérisé en ce que, pour commander l'état de mobilité relative, on fait débiter la pompe à travers un intervalle (64) entre des éléments de friction (19, 22) de l'embrayage, de façon qu'à l'état accouplé de l'embrayage, dans lequel les éléments de friction sont serrés, cet intervalle (64) disparaisse et provoque ainsi au moins une réduction du débit de sortie de la pompe.

3. Dispositif de transmission à au moins deux rapports, comprenant une combinaison de dentures (8, 9, 11) pouvant fonctionner en un état de mobilité relative dans lequel la combinaison transmet de la puissance selon un premier rapport de vitesse entre l'entrée et la sortie de la transmission ou en état de fixité relative pour réaliser un deuxième rapport de vitesse entre l'entrée et la sortie de la transmission, des moyens de guidage d'huile (51, 54, 56) le long des régions de deux dentures (9, 11) de la combinaison qui se déplacent l'une vers l'autre lors du fonctionnement selon le premier rapport de transmission, des moyens (42, 43, 44, 46) d'admission d'huile dans les creux de dentures (52, 53) de l'une au moins de ces régions, un trajet de refoulement d'huile (57, 58, 62, 64) partant d'une région (54) où les deux dentures (9, 11) commencent à engrener, des moyens de commande de changement de rapport comprenant des moyens (27, 29, 39) pour sélectivement ouvrir ou sensiblement fermer le trajet de refoulement de l'huile pour commander le fonctionnement selon le premier rapport de transmission ou respectivement le fonctionnement selon le deuxième rapport de transmission, et un embrayage (18a) qui relie sélectivement deux éléments rotatifs (8, 13) reliés au moins indirectement aux dentures (8, 9, 11) de la combinaison de manière que la combinaison de dentures travaille selon le deuxième rapport de transmission lorsque l'embrayage est dans un état accouplé, les moyens de commande de changement de rapport comprenant en outre des moyens pour, lors du passage du premier au deuxième rapport de transmission, commander le passage de l'embrayage (18a) à l'état accouplé après la fermeture au moins partielle dudit trajet de refoulement de l'huile.

4. Dispositif de transmission selon la revendication 3, caractérisé en ce que les moyens (27, 29, 39) pour sélectivement ouvrir ou sensiblement fermer le trajet de refoulement de l'huile sont commandés de manière automatique en fonction d'une vitesse de rotation et/ou d'un couple transmis dans le dispositif de transmission.

5. Dispositif de transmission selon la revendication 3 ou 4, caractérisé en ce que l'embrayage (18a) est du type à friction dans lequel des éléments de friction sont serrés lorsque l'embrayage est à l'état accouplé et desserrés pour maintenir l'embrayage à l'état désaccouplé.

6. Dispositif de transmission selon la revendication 5, caractérisé en ce qu'un intervalle variable (64) entre les éléments de friction (19, 22) de l'embrayage s' annule sensiblement lorsque les éléments de friction sont serrés, et en ce que le trajet de refoulement de l'huile passe par cet intervalle variable (64) qui fait partie des moyens pour sélectivement ouvrir ou sensiblement fermer le trajet de refoulement de l'huile.

7. Dispositif de transmission selon la revendication 6, caractérisé en ce que l'une au moins de deux faces de friction opposées entre lesquelles est formé l'intervalle comporte des rainures (62) qui définissent des passages d'huile entre les éléments de friction (19, 22) au moins lorsque les éléments de friction sont desserrés et que l'embrayage est par conséquent à l'état désaccouplé.

8. Dispositif de transmission selon la revendication 7, caractérisé en ce que les rainures (62) sont fermées, de manière à fermer le passage d'huile dans les rainures (62) lorsque l'embrayage (18a) est à l'état accouplé.

9. Dispositif de transmission selon la revendication 8, caractérisé en ce que les rainures (62) sont fermées à une extrémité aval relativement à la direction d'écoulement de l'huile le long des rainures.

10. Dispositif de transmission selon l'une des revendications 5 à 9, caractérisé en ce que l'embrayage comprend un empilement de disques axialement coulissants (19, 22) alternativement liés en rotation aux deux éléments rotatifs de l'embrayage dont l'un (21) est solidaire d'une couronne dentée (8) d'un train épicycloïal (7) formant la combinaison de dentures, et l'autre (23) est solidaire d'un porte-satellites (13) du train épicycloïdal (7).

11. Dispositif de transmission selon la revendication 10, caractérisé en ce que la couronne (8) a une denture hélicoïdale et est montée axialement coulissante pour actionner l'embrayage (18a) dans le sens du désaccouplement sous l'action de la poussée axiale (Pac) engendrée par la denture hélicoïdale, un moyen tachymétrique (29) étant en outre prévu pour solliciter la couronne (8) dans le sens de l'accouplement de l'embrayage avec une force croissant en fonction de la vitesse de rotation.

12. Dispositif de transmission selon la revendication 11, caractérisé en ce que le moyen tachymétrique est de type centrifuge (29).

13. Dispositif selon l'une des revendications 10 à 12, caractérisé en ce que les deux éléments rotatifs sont respectivement des cannelures radialement intérieures (21) à fond fermé et des cannelures radialement extérieures (23) formées par des fentes permettant l'écoulement de l'huile ayant traversé l'empilement de disques selon un trajet dirigé radialement vers l'extérieur.

14. Dispositif selon l'une des revendications 6 à 13, caractérisé en ce que le trajet de l'huile (62, 64) est dirigé radialement vers l'extérieur dans l'intervalle entre les éléments de friction (19, 22).

## Patentansprüche

1. Verfahren zum Steuern eines Wechselgetriebes in einem Getriebe, bestehend aus einer Kombination von Zahnungen (8, 9, 11), die ineinandergreifen und in einem Zustand relativer Beweglichkeit, in dem die Kombination Leistung nach einem ersten Gangverhältnis zwischen einem Ausgang und einem Eingang des Getriebes überträgt, oder in einem Zustand relativer Festigkeit arbeiten können, um ein zweites Gangverhältnis zwischen dem Ausgang und dem Eingang des Getriebes herzustellen, wobei die Kombination von ineinandergreifenden Zahnungen in Form einer Zahnradhydraulikpumpe (9, 11, 51, 57) ausgeführt ist, Verfahren, bei dem der zweite Gang gesteuert wird, indem im wesentlichen der Druchfluß am Ausgang der Zahnradpumpe beseitigt wird, bei dem der erste Gang durch Freigabe des Durchflusses am Ausgang der Zahnradpumpe gesteuert wird, und für den Übergang vom ersten in den zweiten Gang, nachdem zumindest teilweise der Durchfluß am Ausgang der Zahnradpumpe beseitigt wurde, eine Kupplung (18a) in den eingekuppelten Zustand gebracht wird, die in dem eingekuppelten Zustand dazu neigt, die Kombination von Zahnungen im Zustand relativer Festigkeit arbeiten zu lassen, und im entkuppelten Zustand der Zahnungskombination den Zustand relativer Beweglichkeit ermöglicht, der dem ersten Gang entspricht.

2. Verfahren nach Anspruch 1, dadurch gekennzeichnet, daß zum Steuern des Zustandes relativer Beweglichkeit die Pumpe über einen Zwischenraum (64) zwischen Reibungselementen (19, 22) der Kupplung fördert, so daß im eingekuppelten Zustand der Kupplung, in dem die Reibungselemente zusammengedrückt werden, dieser Zwischenraum (64) verschwindet und somit zumindest eine Verringerung des Durchflusses am Pumpenausgang hervorruft.

3. Getriebe mit zumindest zwei Gängen, bestehend aus einer Kombination von Zahnungen (8, 9, 11), die in einem Zustand relativer Beweglichkeit, in dem die Kombination Leistung nach einem ersten Gangverhältnis zwischen dem Eingang und dem Ausgang des Getriebes überträgt, oder in einem Zustand relativer Festigkeit arbeiten kann, um ein zweites Gangverhältnis zwischen dem Eingang und dem Ausgang des Getriebes herzustellen, Ölführungsmitteln (51, 54, 56) entlang der Bereiche von zwei Zahnungen (9, 11) der Kombination, die sich zueinander bewegen während des Betriebs im ersten Gang, Mitteln (42, 43, 44, 46) zum Einlassen von Öl in die Hohlräume der Zahnungen (52, 53) von zumindest einem dieser Bereiche, einer Ölförderbahn (57, 58, 62, 64) ausgehend von einem Bereich (54), in dem die beiden Zahnungen (9, 11) beginnen ineinanderzugreifen, Mitteln zum Steuern des Gangwechsels, bestehend aus Mitteln (27, 29, 39), um selektiv die Ölförderbahn zu öffnen oder im wesentlichen zu verschließen, um den Betrieb nach dem ersten Gang bzw. den Betrieb nach dem zweiten Gang zu steuern, und einer Kupplung (18a), die selektiv zwei drehbare Elemente (8, 13) verbindet, die zumindest indirekt mit den Zahnungen (8, 9, 11) der Kombination dermaßen verbunden sind, daß die Kombination von Zahnungen nach dem zweiten Gang arbeitet, wenn die Kupplung in einem eingekuppelten Zustand ist, wobei die Mittel zum Steuern des Gangwechsels ferner Mittel umfassen, um bei Übergang vom ersten in den zweiten Gang den Übergang der Kupplung (18a) in den eingekuppelten Zustand zu steuern, nachdem die Ölförderbahn zumindest teilweise verschlossen wurde.

4. Getriebe nach Anspruch 3, dadurch gekennzeichnet, daß die Mittel (27, 29, 39), um selektiv die Ölförderbahn zu öffnen oder zu verschließen, automatisch in Abhängigkeit von einer Rotationsgeschwindigkeit und/oder einem in dem Getriebe übertragenen Moment gesteuert werden.

5. Getriebe nach Anspruch 3 oder 4, dadurch gekennzeichnet, daß die Kupplung (18a) eine Reibkupplung ist, bei der die Reibungselemente zusammengedrückt werden, wenn sich die Kupplung im eingekuppelten Zustand befindet, und gelöst werden, um die Kupplung im entkuppelten Zustand zu halten.

6. Getriebe nach Anspruch 5, dadurch gekennzeichnet, daß ein variabler Zwischenraum (64) zwischen den Reibungselementen (19, 22) der Kupplung im wesentlichen beseitigt wird, wenn die Reibungselemente zusammengedrückt werden, und daß die Ölförderbahn durch diesen variablen Zwischenraum (64) führt, der den Mitteln gehört , um die Ölförderbahn selektiv zu öffnen oder zu verschließen.

7. Getriebe nach Anspruch 6, dadurch gekennzeichnet, daß zumindest eine der beiden gegenüberliegenden Reibungsflächen, zwischen denen der Zwischenraum gebildet wird, Nuten (62) umfaßt, die Öldurchgänge zwischen den Reibungselementen (19, 22) zumindest dann bilden, wenn die Reibungselemente gelöst sind und sich die Kupplung folglich im entkuppelten Zustand befindet.

8. Getriebe nach Anspruch 7, dadurch gekennzeichnet, daß die Nuten (62) verschlossen sind, so daß der Öldurchfluß in den Nuten (62) verschlossen ist, wenn sich die Kupplung (18a) im eingekuppelten Zustand befindet.

9. Getriebe nach Anspruch 8, dadurch gekennzeichnet, daß die Nuten (62) an einem nachlaufseitigen Ende relativ zur Abfließrichtung des Öls entlang der Nuten verschlossen sind.

10. Getriebe nach einem der Ansprüche 5 bis 9, dadurch gekennzeichnet, daß die Kupplung einen Stapel von axial gleitenden Scheiben (19, 22) umfaßt, die abwechselnd drehfest mit zwei drehbaren Elementen der Kupplung verbunden sind, von denen eines (21) mit einem Zahnkranz (8) eines Umlaufgetriebezuges (7) verbunden ist, der die Zahnungskombination bildet, und der andere (23) mit einem Planetenradträger (13) des Umlaufgetriebezuges (7) verbunden ist.

11. Getriebe nach Anspruch 10, dadurch gekennzeichnet, daß der Kranz (8) eine Spiralzahnung aufweist und axial gleitend montiert ist, um die Kupplung (18a) in die Richtung der Entkupplung unter der Wirkung des Axialschubes (Pac) zu betätigen, der durch die Spiralzahnung erzeugt wird, wobei ein Tachometermittel (29) ferner vorgesehen ist, um den Kranz (8) in die Richtung der Einkupplung der Kupplung mit einer Kraft zu beanspruchen, die in Abhängigkeit von der Rotationsgeschwindigkeit steigt.

12. Getriebe nach Anspruch 11, dadurch gekennzeichnet, daß das Tachometermittel ein Zentrifugalmittel (29) ist.

13. Getriebe nach einem der Ansprüche 10 bis 12, dadurch gekennzeichnet, daß die beiden drehbaren Elemente radial innenliegende Rillen (21) mit geschlossenem Boden bzw. radial außenliegende Rillen (23) sind, die von Spalten gebildet werden, die das Abfließen des Öls ermöglichen, das durch den Scheibenstapel entlang einer radial nach außen gerichteten Bahn geflossen ist.

14. Vorrichtung nach einem der Ansprüche 6 bis 13, dadurch gekennzeichnet, daß die Ölbahn (62, 64) radial nach außen in den Zwischenraum zwischen den Reibungselementen (19, 22) gerichtet ist.

## Claims

1. A ratio change control method in a transmission device comprising a combination of meshing sets of teeth (8, 9, 11) capable of operating in a state of relative mobility in which the combination transmits power in a first speed ratio between a transmission output and input, or in a state of relative fixity to achieve a second speed ratio between the transmission output and input, the combination of meshing teeth taking the form of an hydraulic gear pump (9, 11, 51, 57), in which method the second transmission ratio is controlled by substantially closing off the flow at the gear pump outlet, the first transmission ratio is controlled by releasing the flow at the gear pump outlet, and in order to pass from the first to the second ratio, after having at least partly closed off the flow at the gear pump outlet, a clutch (18a) is made to pass into the coupled state, said clutch tending in the coupled state to make the combination of teeth operate in the state of relative fixity and allowing in the uncoupled state the combination of teeth to assume the state of relative mobility corresponding to the first transmission ratio.

2. A method according to Claim 1, characterised in that, in order to control the state of relative mobility, the pump is made to deliver through a gap (64) between the friction elements (19, 22) of the clutch, so that in the clutch-engaged condition this gap (64) disappears and thus causes at least a reduction in the rate of flow at the pump outlet.

3. A transmission device, which has at least two ratios and comprises a combination of teeth (8, 9, 11) capable of operating in a state of relative mobility in which the combination transmits power in a first speed ratio between the transmission input and output or in a state of relative fixity to achieve a second speed ratio between the transmission input and output, means for guiding oil (51, 54, 56) through regions of two sets of teeth (9, 11) in the combination which move towards each other during operation in the first transmission ratio, means (42, 43, 44, 46) for oil intake into the gaps between the teeth (52, 53) in at least one of these regions, an oil delivery path (57, 58, 62, 64) starting from a region (54) where the two sets of teeth (9, 11) start to mesh, ratio change control means (27, 29, 39) for selectively opening or substantially closing off the oil delivery path to control the operation in the first transmission ratio or operation in the second transmission ratio respectively, and a clutch (18a) which selectively connects two rotating elements (8, 13) connected at least indirectly to the sets of teeth (8, 9, 11) of the combination so that the combination of teeth works in the second transmission ratio when the clutch is in a coupled state, the ratio change control means also comprising means that, on passing from the first to the second transmission ratio, control the passage of the clutch (18a) to the coupled state after the said oil delivery path has been at least partially closed off.

4. A transmission device according to Claim 3, characterised in that the means (27, 29, 39) for selectively opening or substantially closing off the oil delivery path are controlled automatically depending on a speed of rotation and/or a torque transmitted in the transmission device.

5. A transmission device according to Claims 3 or 4, characterised in that the clutch (18a) is of a friction type in which the friction elements are squeezed together when the clutch is in the coupled state and released to keep the clutch in the uncoupled state.

6. A transmission device according to Claim 5, characterised in that a variable space (64) between the friction elements (19, 22) of the clutch substantially disappears when the friction elements are squeezed together, and in that the oil delivery path passes through this variable space (64) which forms part of the means for selectively opening or substantially closing off the oil delivery path.

7. A transmission device according to Claim 6, characterised in that at least one of the two opposing friction faces between which the space is formed has grooves (62) which define oilways between the friction elements (19, 22) at least when the friction elements are released and the clutch is consequently in the disengaged condition.

8. A transmission device according to Claim 7, characterised in that the grooves (62) are closed off so as to close off the passage of oil in the grooves (62) when the clutch (18a) is in the engaged condition.

9. A transmission device according to Claim 8, characterised in that the grooves (62) are closed off at one downstream end relative to the direction of flow of the oil along the grooves.

10. A transmission device according to any one of Claims 5 to 9, characterised in that the clutch comprises a stack of axially-sliding discs (19, 22) alternately connected in rotation to the two rotating elements of the clutch of which one (21) is integral with a toothed crown wheel (8) of an epicyclic train (7) forming the combination of teeth, and the other (23) is integral with a planet gear carrier (13) of the epicyclic train (7).

11. A transmission device according to Claim 10, characterised in that the crown wheel (8) has helical teeth and is mounted so as to slide axially in order to operate the clutch (18a) in the direction of release due to the action of an axial thrust (Pac) generated by the helical teeth, a tachometric means (29) being also provided to push the crown wheel (8) in the direction of clutch engagement with a force that increases with the speed of rotation.

12. A transmission device according to Claim 11, characterised in that the tachometric means is of a centrifugal type (29).

13. A device according to any one of Claims 10 to 12, characterised in that the two rotating elements are radially internal blind splines (21) and radially external splines (23) formed by slots enabling the oil to flow through after having passed through the stack of discs along a path directed radially outwards.

14. A device according to any one of Claims 6 to 13, characterised in that the oil path (62, 64) is directed radially outwards in the space between the friction elements (19, 22).
